# EUROPEAN PATENT APPLICATION

(11) **EP 1 686 374 A1**
(43) Date of publication of application: **02.08.2006**
(21) Application number: 04818515.1
(22) Date of filing: 12.11.2004
(51) Int. Cl.: G01N 31/22, G01N 21/78

(54) **GAS SENSING MEMBER AND GAS DETECTION APPARATUS SUITABLE THEREFOR**

(30) Priority: 13.11.2003 JP 2003384019; 15.10.2004 JP 2004300920
(71) Applicant: RIKEN KEIKI CO., LTD., Tokyo 174-0051 (JP)
(72) Inventor: NAKANO, Nobuo c/o Riken Keiki Co., Ltd., Itabashi-ku, Tokyo 1740051 (JP); KAWABE, Tetsuya c/o Riken Keiki Co., Ltd., Itabashi-ku, Tokyo 1740051 (JP); ABE, Satomi c/o Riken Keiki Co., Ltd., Itabashi-ku, Tokyo 1740051 (JP)
(74) Representative: Haley, Stephen
(86) International application number: PCT/JP2004/016850
(87) International publication number: WO 2005/047888

(57) **Abstract**

A gas detecting element that can effectively prevent fluctuations in measurement sensitivity caused by diffusion of a reagent as well as the occurrence of corrosion. The gas detecting element comprises a frame 1 with an optical density detection window 4 that is not gas-permeable formed on one side to allow optical density detection, and a gas-permeable window 6 formed on the opposing side, with a reagent absorbent material 7 being housed between the two windows and impregnated with a reagent that undergoes coloration change by reaction with a gas to be measured.

## Description

The present invention relates to a gas detecting element that detects the concentration of a gas by coloration reaction, and a gas detecting device suited to the detecting element.

A typical gas detecting element that generates a reaction coloration when gas reacts with a carrier such as cellulose can reliably detect extremely low gas concentrations by extending the sampling time. However, since the carrier is normally formed in a tape shape that is housed on a reel, a paper-feeding mechanism is required. Such a constitution not only adds an additional level of complication to the structure of the measuring device, but also leads to problems such as breakage of the carrier during feeding due to degradation of the carrier caused by the reaction reagent being supported.

In order to solve the aforementioned problems, a gas detecting element has been proposed as disclosed in Japanese Unexamined Patent Application, Publication No. 2003-139762. This gas detecting element consists of a reagent and a carrier to be impregnated therewith housed in a thin container as a cell separated by a breakable membrane. Breakage of the membrane during use causes the carrier to be impregnated with the reagent, thereby preparing the carrier to be used for gas concentration measurement.

Such a constitution can effectively prevent degradation of the gas detecting element prior to use, and also does not require a paper-feeding mechanism, which can reduce the size of the measuring device employing the cell.

However, the reaction reagent that impregnates the carrier can diffuse during measurement and adhere to the measuring means that detects the optical density of the carrier. This leads to disadvantages such as changes in the detection sensitivity of the measuring means, and when the reagent contains acid, there is the risk of corrosion of the measuring means.

The present invention was achieved in view of the above circumstances and has as its object to provide a gas detecting element that can prevent fluctuations in sensitivity caused by diffusion of the reaction reagent and also inhibit corrosion.

Another object of the present invention is to provide a measuring device that is suited to the aforementioned gas detecting element.

The invention according to claim 1 for resolving the aforementioned problems is a gas detecting element comprising a hollow container; an optical density detection window that is not gas-permeable formed on one side of said container to allow optical density detection; a gas-permeable window formed on the opposing side of said container; and a reagent that exhibits coloration by reaction with a gas to be measured housed in a space between said windows.

In the invention according to claim 2, said optical density detection window is constituted by affixing a transparent, non-permeable film to a frame that constitutes said container.

In the invention according to claim 3, said optical density detection window is formed at the same time as injection molding of said container with a transparent, non-permeable material.

In the invention according to claim 4, a reagent absorbent material impregnated with said reagent is housed in said space.

In the invention according to claim 5, a light-reflective surface is formed on the side of said gas-permeable window facing said reagent absorbent material.

The invention according to claim 6 is a gas detecting device comprising a gas exposure portion that opens to a sampling flow path; and an optical density measuring portion provided with a light-emitting means facing said exposure portion and light receiving means, wherein said exposure portion and said optical density measuring portion are oppositely disposed in a separatable manner, and a gas detecting element is housed so that a gas inflow side of the gas detecting element faces the gas exposure portion and an optical density detection portion of the gas detecting element faces said optical density measuring portion.

In the invention according to claim 7, said optical density detection portion and said gas detecting element are constituted so as to maintain airtightness.

### Effects of the Invention

The invention according to claim 1 can prevent a gas and a reaction reagent from flowing into an optical density detection portion through an optical density detection window, and therefore can prevent fluctuations in sensitivity caused by diffusion of the reaction reagent and inhibit corrosion.

The invention according to claim 2 allows the material constituting the optical density detection window to be selected independently of the container.

The invention according to claim 3 eliminates the labor of affixing a film constituting the optical density detection window and can prevent leakage of liquid due to defective adhesion.

The invention according to claim 4 can prevent leakage of the reagent even when it is a liquid by retaining it in the reagent absorbent material.

The invention according to claim 5 can detect the optical density of the reagent absorbent material at a high sensitivity by preventing the light from the light-emitting means from being absorbed.

The invention according to claim 6 can detect optical density while blocking the gas to be detected and the reagent by the non-permeability of the optical density detection window.

The invention according to claim 7 can prevent the gas to be detected from flowing into the optical density measuring portion.

### In the Drawings;

FIG 1 (A) is a cross-sectional view of the first embodiment of the gas detecting element of the present invention, and FIG. 1 (B) is an exploded perspective view of the same.
FIG. 2 is a cross-sectional view of one embodiment of the gas detecting device in the state of the gas detecting element set therein.
FIG. 3 is a cross-sectional view showing another embodiment of the gas detecting element.
FIG. 4 (A) is a cross-sectional view of the second embodiment of the gas detecting element of the present invention, and FIG. 4 (B) is an exploded perspective view of the same.

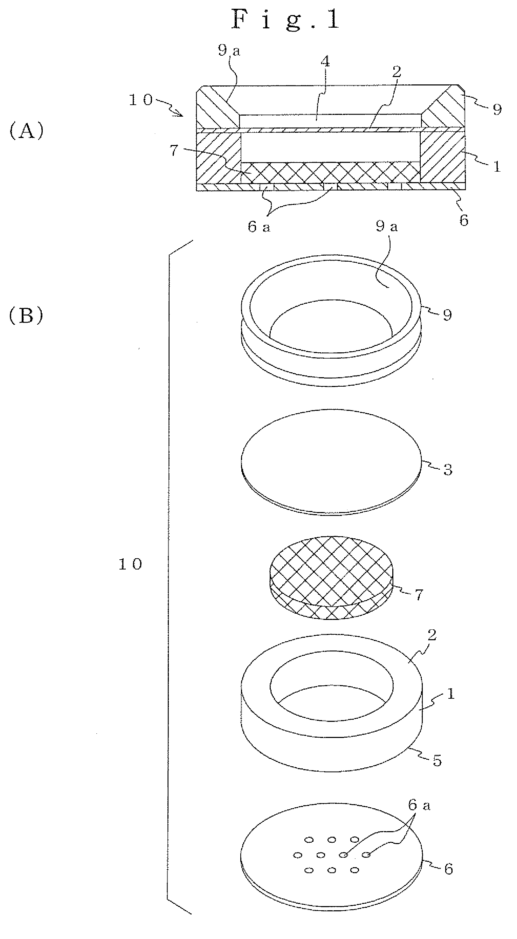

FIG. 1 (A) and (B) respectively show a cross-sectional view and an exploded perspective view of the first embodiment of a gas detecting element of the present invention. A surface 2 on one side of a ring-shaped frame 1 is sealed with a transparent or semi-transparent non-permeable film 3, whereby an optical density detection window 4 is formed. A gas passage layer 6 is formed on another surface 5 on the other side of the frame 1. In a cell formed between the non-permeable film 3 and the gas passage layer 6 is housed a reagent absorbent material 7 that is a porous material of a color density, preferably white, that enables detection of coloration change due to reaction of a reagent. In the present embodiment, the reagent absorbent material 7 is a nonwoven fabric such as glass fiber.

The gas passage layer 6 is constituted of a material provided with corrosive resistance and light reflectivity, with gas passage holes 5a formed therethrough. The material constituting the gas passage layer 6 may be a film comprising aluminum foil coated with a polymer material or a laminate film consisting of laminated polymer film. Changing the size and number of the gas passage holes 6a can adjust the quantity of gas that flows inside, and thereby alter the detection sensitivity.

The reagent absorbent material 7 is housed so as to adhere closely to the film 3 of the optical density detection window 4 for optical density detection by a measuring device described below.

The nonwoven material constituting the reagent absorbent material 7 may be impregnated with the reagent in advance before being housed, or impregnated with the reagent after being housed in the cell by delivering a specified amount of the reagent by drops through the gas passage holes 6a to soak into the material.

A frame 9 provided on the optical density detection window 4 has a tapered portion 9a for guiding the distal end of a measuring head described below.

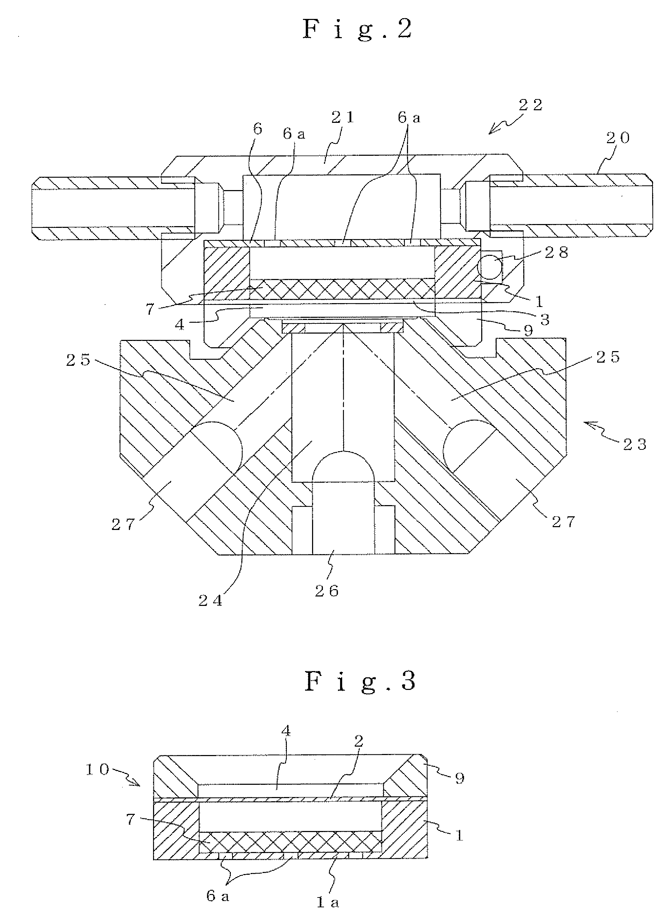

FIG. 2 shows one embodiment of the measuring device suited to the aforementioned gas detecting element 10. The measuring device comprises an exposure portion 22 that has an opening 21 located in a flow path 20 of the gas to be measured and a measuring head 23. The measuring head 23 and the exposure portion 22 are constituted to be separatable from each other.

A through-hole 24 that is perpendicular to the detection window 4 of the gas detecting element 10 and through-holes 25, 25 that are slanted so as to intersect at the end of the through-hole 24 are formed in the measuring head 23. A light-receiving means 26 is housed in the through-hole 24 and light-emitting means 27, 27 are housed in the through-holes 25, 25.

A gas sealing member 28 such as a packing is disposed at the opening of the exposure portion 22 to facilitate an airtight engagement with the surface of the gas detecting element 10. Also, providing an annular packing on the surface of the measuring head 23 in contact with the outer periphery of the optical density detection window 4 can prevent the gas to be detected and the reagent from flowing into the measuring head 23.

In the present embodiment, the optical density detection window 4 of the gas detecting element 10 is set so as to face downward, that is, to face the measuring head 23, and is joined to the exposure portion 22 and the measuring head 23. By drawing in the gas to be measured with a suction pump, a portion of the gas to be measured flows into the opening 21, and therefrom passes through the gas passage holes 6a of the gas passage layer 6 into the reagent absorbent material 7.

The reagent in the reagent absorbent material 7 then reacts with the gas to be measured to yield a coloring reaction. When a specified time has elapsed, the measuring head 23 is actuated to that light from the light-emitting means 27, 27 is irradiated on the optical density detection window 4. The light emitted from the light-emitting means 27, 27 is reflected by the reagent absorbent material 7 to an extent depending on its optical density. By detecting the intensity of the reflected light with the light-receiving means 26, the concentration of the gas being measured can be found.

In the present embodiment, since the optical density detection window 4 is disposed facing downward, the reagent absorbent material 7 adheres closely to the film 3 of the optical density detection window 4. This enables reliable and accurate detection of changes in the optical density of the reagent absorbent material 7.

By applying a reflective finish to the surface of the gas passage layer 6 facing the reagent absorbent material 7, the optical density of the reagent absorbent material 7 can be reliably detected at a high sensitivity without the light from the light-emitting means 27, 27 being absorbed.

Since the opening of the measuring head 23 is sealed by the film 3 at the optical density detection window 4 of the gas detecting element 10, the gas to be detected and volatile matter of the reagent are prevented from entering the measuring head 23. Consequently, there is no fogging and corrosion of the light-receiving means 26 and the light-emitting means 27, 27.

When the measurement is complete, the measuring head 23 is removed to allow replacement of the gas detecting element 10 for the next measurement.

In the aforementioned embodiment, the gas passage layer 6 was constituted separately from the frame 1. However, as shown in FIG. 3, it will be recognized by one skilled in the art that the same effect can be achieved by forming the frame 1 in a flat-bottomed, cylindrical shape with gas passage holes 6a allowing passage of the gas being formed in a bottom portion 1a thereof.

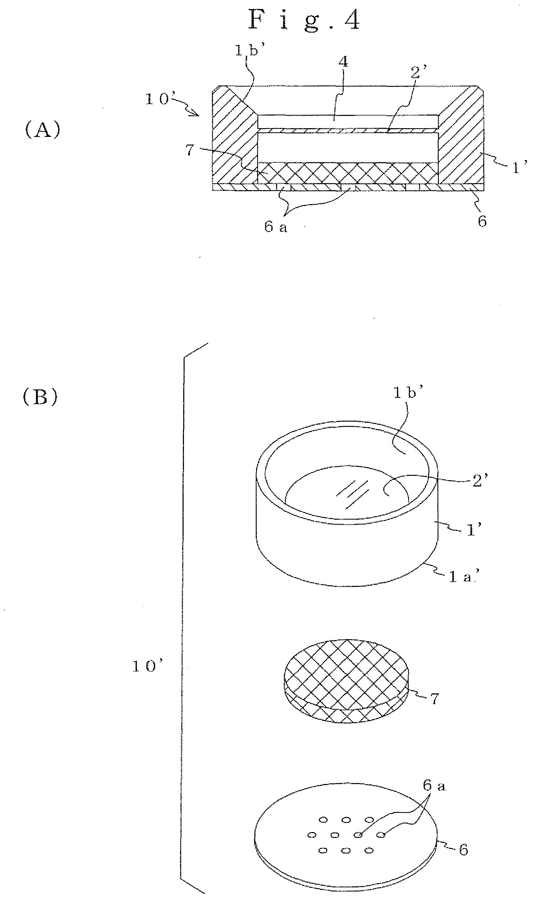

FIG. 4 (A) and (B) shows a second embodiment of the gas detecting element, denoted by the reference numeral 10'. In this embodiment, a frame 1' formed by injection molding of an optically-transparent polymer material, such as polyethylene, and a thin wall 2' that serves as the optical density detection window are integrally formed. A tapered portion 1b' is formed as appropriate on the inner circumferential face of the end portion of the frame 1'.

In the present embodiment, the gas detecting element 10' is constituted with the reagent absorbent material 7 loaded from an opening 1a' side of the frame 1', with the gas passage layer 6 affixed to the opening la'. Similarly to the first embodiment, the reagent absorbent material 7 may be impregnated with the reagent in advance, or impregnated with the reagent after being housed.

The present embodiment does not require the transparent or semi-transparent non-permeable film 3 as disclosed in the first embodiment, and so eliminates the labor of affixing the film 3 to the frame with an adhesive or the like. As a result, leakage of liquid into the detecting device due to defective adhesion of the film 3 can be prevented.

In the aforementioned embodiments, the reagent absorbent material is housed in the space formed in the container and impregnated with a reagent that is retained in the reagent absorbent material so as to not to leak out. However, the present invention is not limited thereto. For example, the reagent absorbent material may be eliminated by treating the reagent to be highly viscous or a paste.

While preferred embodiments of the invention have been described and illustrated above, it should be understood that these are exemplary of the invention and are not to be considered as limiting. Additions, omissions, substitutions, and other modifications can be made without departing from the spirit or scope of the present invention. Accordingly, the invention is not to be considered as being limited by the foregoing description, and is only limited by the scope of the appended claims.

## Claims

1. A gas detecting element comprising:
a hollow container;
an optical density detection window that is not gas-permeable formed on one side of said container to allow optical density detection;
a gas-permeable window formed on the opposing side of said container; and
a reagent that exhibits coloration by reaction with a gas to be measured housed in a space between said windows.

2. A gas detecting element in accordance with claim 1, wherein:
said optical density detection window is constituted by affixing a transparent, non-permeable film to a frame that constitutes said container.

3. A gas detecting element in accordance with claim 1, wherein:
said optical density detection window is formed at the same time as injection molding of said container with a transparent, non-permeable material.

4. A gas detecting element in accordance with claim 1, wherein:
a reagent absorbent material impregnated with said reagent is housed in said space.

5. A gas detecting element in accordance with claim 1, wherein:
a light-reflective surface is formed on the side of said gas-permeable window facing said reagent absorbent material.

6. A gas detecting device comprising:
a gas exposure portion that opens to a sampling flow path; and
an optical density measuring portion provided with a light-emitting means facing said exposure portion and light receiving means,
wherein said exposure portion and said optical density measuring portion are oppositely disposed in a separateable manner, and a gas detecting element is housed so that a gas inflow side of the gas detecting element faces the gas exposure portion and an optical density detection portion of the gas detecting element faces said optical density measuring portion.

7. A gas detecting device according to claim 6, wherein said optical density detection portion and said gas detecting element are constituted so as to maintain airtightness.
